# EUROPÄISCHE PATENTSCHRIFT

(11) **EP 2 876 770 B1**
(45) Veröffentlichungstag und Bekanntmachung des Hinweises auf die Patenterteilung: **17.08.2016**
(21) Anmeldenummer: 14158495.3
(22) Anmeldetag: 10.03.2014
(51) Int. Cl.: H02J 5/00, H02J 50/60, B60L 11/18, H02J 7/00, H02J 7/02

(54) **Verfahren zur kabellosen Übertragung einer Leistung**
Method for the cableless transmission of power
Procédé de transmission sans fil d'une puissance

(30) Priorität: 22.11.2013 DE 102013112929
(43) Veröffentlichungstag der Anmeldung: 27.05.2015
(73) Patentinhaber: TOSHIBA Electronics Europe GmbH, 40549 Düsseldorf (DE)
(72) Erfinder: Schorpp, Marcus, 37500 Lempäälä (FI)
(74) Vertreter: Stenger Watzke Ring

(56) Entgegenhaltungen:
- WO-A2-2013/056234
- JP-A- 2013 059 239
- US-A1- 2011 196 544

## Beschreibung

Die Erfindung betrifft ein Verfahren zur kabellosen Übertragung einer Leistung zwischen einem Sender und einem Empfänger aufweisend eine Leistungsphase und eine Messphase, wobei der Empfänger während der Messphase eine empfangene Leistung misst und eine Information über die gemessene Leistung an den Sender übermittelt, wobei der Sender die von ihm ausgesendete Leistung mit der von dem Empfänger gemessenen Leistung vergleicht und daraus eine Verlustleistung ermittelt, wobei die Leistungsphase unterbleibt, wenn die Verlustleistung einen maximal zulässigen Grenzwert überschreitet.

Verfahren zur kabellosen Übertragung einer Leistung sind im Stand der Technik bekannt. Diese Verfahren dienen dazu, elektronische Geräte wie beispielsweise schnurlose Telefone zu laden. Dafür wird der zu ladende Gegenstand beispielsweise auf einer Ladeplatte abgelegt, wobei der Sender (Ladeplatte) und der Empfänger (zu ladendes Gerät) permanent Daten austauschen, um eine optimale Leistungsübertragung zu gewährleisten. Dabei fordert der Empfänger in gleichmäßigen Zeitabständen Leistungsänderungen von dem Sender an. Um eine Interoperabilität zwischen Ladegeräten und Empfängern unterschiedlicher Hersteller zu gewährleisten, wurde im Stand der Technik ein sogenannter "Wireless Power Standard" (WPC) geschaffen, wobei bestimmte technische Daten wie beispielsweise die übertragene Leistung vereinheitlicht wurden. Einen solchen Standard gibt der sogenannte "Low Power Standard" (LP) an. Bei diesem werden 5 W kabellos zwischen Sender und Empfänger übertragen.

Um gleichzeitig die Übertragung zwischen Sender und Empfänger nur dann durchzuführen, wenn tatsächlich auch ein "gültiger" Empfänger im Ladebereich des Senders vorhanden ist, ist im Stand der Technik eine sogenannte Fremdobjektdetektion vorgesehen, mittels welcher geprüft wird, ob der Sender tatsächlich mit einem "gültigen" Empfänger verbunden ist und sich nicht zusätzlich zum gültigen Empfänger ein fremdes Metallobjekt im Übertragungsbereich befindet, wie beispielsweise eine Münze, welche ausversehen in den Ladebereich des Senders gelangt ist. Metallische Fremdobjekte absorbieren die elektromagnetische Strahlung welche vom Sender zum Empfänger gesendet wird. Diese Fremdobjektdetektion verhindert somit, dass sich ein Fremdobjekt durch absorbierte Leistung stark erwärmt.

Die Fremdobjektdetektion funktioniert so, dass der Empfänger misst wie viel Leistung er von dem Sender empfängt und diesen gemessenen Wert als Information an den Sender übermittelt. Der Sender wiederum vergleicht die an ihn übermittelte Information mit der von ihm ausgesendeten Leistung. Sofern die Verlustleistung (gesendete Leistung minus empfangene Leistung) größer als ein vorgegebener Wert ist, wird angenommen, dass ein Fremdobjekt im Übertragungsfeld des Senders liegt und mehr Leistung als erlaubt empfängt. In diesem Fall wird die Leistungsübertragung unterbrochen. Der für die Verlustleistung vorgegebene Grenzwert hängt von der Messgenauigkeit der verwendeten Messeinrichtung und von dem jeweiligen Standard ab, mit welchem Leistung von dem Sender an den Empfänger übertragen wird. Im Low-Power-Standard erfolgt eine Leistungsübertragung von 5 W. Bei einer regelmäßigen Messgenauigkeit von ca. 5% kann die Verlustleistung somit bis auf 250 mW genau gemessen werden. Diese Verlustleistung von 250 mW führt bei einem Fremdobjekt zu dessen Erhitzung, beispielsweise auf 80°C. Eine solche Erhitzung wäre unter Sicherheitsgesichtspunkten noch akzeptabel.

Sofern nunmehr jedoch eine größere Leistung zwischen dem Sender und dem Empfänger übertragen werden soll, entstehen bei einer Messgenauigkeit von 5% wesentlich höhere Temperaturen in Bezug auf ein etwaiges Fremdobjekt. Bei Übertragung einer Leistung im sogenannten Medium Power Standard, welcher die Übertragung von 15 W vorsieht, kann die Verlustleistung bis auf 750 mW genau gemessen werden, was jedoch zu einer übermäßigen Erhitzung eines Fremdobjektes führen würde.

Ausgehend von dem vorbeschriebenen Problem ist es Aufgabe der Erfindung, ein Verfahren zur kabellosen Übertragung einer Leistung zwischen einem Sender und einem Empfänger zu schaffen, welches eine messgenaue Fremdobjektdetektion, insbesondere unabhängig von der Verwendung eines bestimmten Power Standards, ermöglicht und somit eine übermäßige, gefährliche Erhitzung von Fremdobjekten zuverlässig verhindert.

Zur Lösung der vorgenannten Aufgabe schlägt die Erfindung ein Verfahren zur kabellosen Übertragung einer Leistung zwischen einem Sender und einem Empfänger aufweisend eine Leistungsphase und eine Messphase vor, wobei der Sender während der Messphase eine Leistung aussendet, welche geringer ist als die während der Leistungsphase ausgesendete Leistung. Erfindungsgemäß erfolgt die Fremdobjektdetektion damit auf einem zu der Leistungsphase niedrigeren Leistungsniveau, welches so ausgelegt ist, dass die Verlustleistung nicht zu einer übermäßigen Erhitzung eines etwaigen Fremdobjektes führt. Zur Durchführung der Messphase wird somit die von dem Sender ausgesendete Leistung auf einen Betrag reduziert, welcher auch bei Anwesenheit eines metallischen Fremdobjektes Sicherheit gewährleistet.

Es kann vorgesehen sein, dass sich Messphasen und Leistungsphasen zeitlich aufeinanderfolgend abwechseln. Dabei wird die Messphase in einem gewissen Zeitrhythmus zwischen aufeinanderfolgenden Leistungsphasen wiederholt, um auf diese Weise in regelmäßigen Abständen eine hohe Sicherheit gewährleisten zu können.

Alternativ kann jedoch ebenfalls vorgesehen sein, dass vor einer Leistungsphase zeitlich aufeinanderfolgend einmalig eine Messphase ausgeführt wird. Dabei dient die Messphase als Initialvorgang vor einer langen, kontinuierlichen Leistungsphase. Diese Ausführungsvariante fußt auf der Annahme, dass es bei bestimmten baulichen Gegebenheiten vom Sender und Empfänger relativ unwahrscheinlich ist, dass sich während des Ladevorgangs ein Fremdobjekt zwischen den Sender und den Empfänger schiebt und somit erhitzt werden kann. Angewandt auf die Übertragung einer Leistung von 15 W (Medium Power Standard) kann die Verlustleistung beispielsweise innerhalb einer 5 W-Messphase (Low Power Standard) gemessen werden und die errechnete Verlustleistung abgespeichert werden, so dass diese als Kalibrierung dient, um die Messgenauigkeit auch bei 15 W zu gewährleisten. Eine solche Umschaltung von einer Leistungsphase mit 15 W in eine Messphase mit 5 W und umgekehrt ist möglich, weil beide Standards zueinander kompatibel sind und insbesondere eine gleiche Übertragungsfrequenz aufweisen. Sofern während der Messphase kein Fremdobjekt detektiert wird, d. h. die ermittelte Verlustleistung unter dem maximal zulässigen Grenzwert liegt, wird die Leistungsphase geschaltet.

Es ist vorgesehen, dass der Sender während einer Leistungsphase eine Leistung von mehr als 5 W, insbesondere von 15 W, aussendet. Bei einer solchen Konfiguration lässt sich besonders vorteilhaft von der Erfindung profitieren. Leistungsphasen mit einer Leistung von mehr als 5 W, und insbesondere von 15 W, sind nicht geeignet, um eine gefahrlose Messung der Verlustleistung durchzuführen. Sofern man mit der Leistung der Leistungsphase (z. B. 15 W) messen würde, ergäbe sich bei einer Messgenauigkeit von 5% eine Verlustleistung von mehr als 250 mW und damit Fremdobjekt-Temperaturen von beispielsweise mehr als 80°C. Dies kann zu gefährlichen Verbrennungen oder auch Bränden führen. Insofern ist die Erfindung überall dort vorteilhaft, wo während der Leistungsphase mehr als 5 W übertragen werden.

Der Sender sendet während einer Messphase eine Leistung von höchstens 5 W aus. Dabei kann auch eine Leistung, welche deutlich kleiner als 5 W ist, ausgesendet werden. Dadurch beträgt die während der Messphase übertragene Leistung vorteilhaft weniger als die während der Leistungsphase übertragene Leistung von mehr als 5 W, insbesondere von 15 W im Medium Power Standard. Es ergibt sich somit in dieser Konfiguration vorteilhaft eine Leistungsphase mit hoher Leistung und eine Messphase mit niedriger Leistung, so dass zum einen während der Leistungsphase eine hohe Leistung übertragen werden kann und zum anderen in der Messphase die Fremdobjektdetektion durchgeführt werden kann ohne die Gefahr eines Brandes oder einer Verletzung.

Gemäß einer ersten Ausführungsform der Erfindung initiiert der Sender eine Messphase. Dabei sendet der Sender auf eigene Initiative eine Leistung von beispielsweise 5 W aus. Die Wiederholungsfrequenz der Messungen in den Messphasen entspricht vorteilhafterweise der Wiederholungsfrequenz der im Stand der Technik bekannten Messungen in den Leistungsphasen. Im momentanen Medium Power Standard beträgt diese Wiederholungsfrequenz der Fremdobjektmessung typischerweise 1,5 Sekunden, maximal 4 Sekunden. Dies bedeutet, dass die Zeitdifferenz zwischen zwei aufeinanderfolgenden Messungen 1,5s, maximal 4s, beträgt. Dadurch wird gleichzeitig auch die Zeitspanne definiert, innerhalb welcher der Empfänger die Information über die empfangene Leistung an den Sender zu berichten hat. Die Dauer zwischen zwei Berichten soll also typischerweise 1,5s sein, kann aber auch maximal 4s betragen. Der Empfänger erkennt durch die Reduzierung der Leistung auf 5 W die Messphase und misst daraufhin die empfangene Leistung während dieser Messphase und sendet eine Information darüber zurück an den Sender. Nachdem der Sender die Information erhalten hat, erhöht dieser die übertragene Leistung auf die Leistung der Leistungsphase, d. h. auf mehr als 5 W, insbesondere 15 W, sofern die gemessene Verlustleistung zwischen ausgesendeter Leistung und empfangener Leistung nicht größer ist als ein vorgegebener Grenzwert. Für diese senderinitiierte Leistungsänderung wird lediglich ein einfach aufgebauter Empfänger benötigt.

Alternativ kann vorgesehen sein, dass der Empfänger eine Messphase initiiert. In dieser Ausführungsvariante fordert der Empfänger den Sender auf, die übertragene Leistung zu reduzieren, beispielsweise auf 5 W. Die Wiederholungsfrequenz der Messungen in den Messphasen entspricht vorteilhafterweise auch hier der Wiederholungsfrequenz der im Stand der Technik bekannten Messungen in den Leistungsphasen, wobei sich die Wiederholungsfrequenz mehr oder weniger ändert, da der Empfänger gemäß dieser Variante bestimmen kann, wann er misst, solange er innerhalb der maximal zulässigen Zeitspanne zwischen zwei Messungen (4s) bleibt. Diese "Aufforderung" des Empfängers erfolgt vorteilhaft in einem besonderen Datenformat "Fremdobjektdetektion", welches den Prozess gegenüber einem üblichen Fehlleistungs-Datenpaket beschleunigen kann. Nach der Leistungsreduzierung misst der Empfänger die empfangene Leistung innerhalb der Messphase und berichtet diese Information an den Sender. Der Sender empfängt diese Information und vergleicht die von ihm ausgesendete Leistung mit der von dem Empfänger empfangenen Leistung. In Abhängigkeit von der dadurch ermittelten Verlustleistung wird die Leistungsübertragung fortgesetzt oder nicht, d. h. sofern die Verlustleistung unter dem vorgegebenen Grenzwert liegt, kann der Empfänger wieder eine höhere Leistung als die Messleistung anfordern. Vorteilhaft ist dabei, dass der Empfänger von sich aus den besten Zeitpunkt für die Initiierung der Messphase bestimmen kann. Insbesondere ist es möglich, dass der Empfänger für die Initiierung einen Zeitpunkt wählt, in welchem geringere Leistungsdifferenzen sowohl für den Sender als auch den Empfänger selbst zwischen der Leistungsphase und der Messphase bestehen. Insbesondere kann der Empfänger den besten Zeitpunkt in Abhängigkeit des aktuellen Ladestroms wählen. Da die von dem Sender ausgesendete Leistung darüber hinaus von dem Empfänger angefordert wird, ist es möglich, dass der Empfänger eine schrittweise Herabsetzung der übertragenen Leistung initiiert, so dass zwischen der Leistung der Leistungsphase und der Leistung der Messphase keine stufenartige Leistungsänderung erfolgt, sondern vielmehr ein kontinuierlicher Leistungsabfall. Dadurch wird innerhalb des integrierten Schaltkreises sowohl des Empfängers als auch des Senders die Entstehung elektromagnetischer Störfelder verhindert.

Im Folgenden wird die Erfindung anhand von Ausführungsbeispielen näher erläutert.

Es zeigen:
- Fig. 1:: a) einen Sender mit darauf liegendem Empfänger,
b) einen Sender mit darauf liegendem Fremdobjekt,
c) einen Sender mit darauf liegendem Empfänger und Fremdobjekt;
- Fig. 2:: Leistungsverläufe von Sender und Empfänger während eines senderinitiierten Verfahrens;
- Fig. 3:: Leistungsverläufe von Sender und Empfänger während eines empfängerinitiierten Verfahrens.

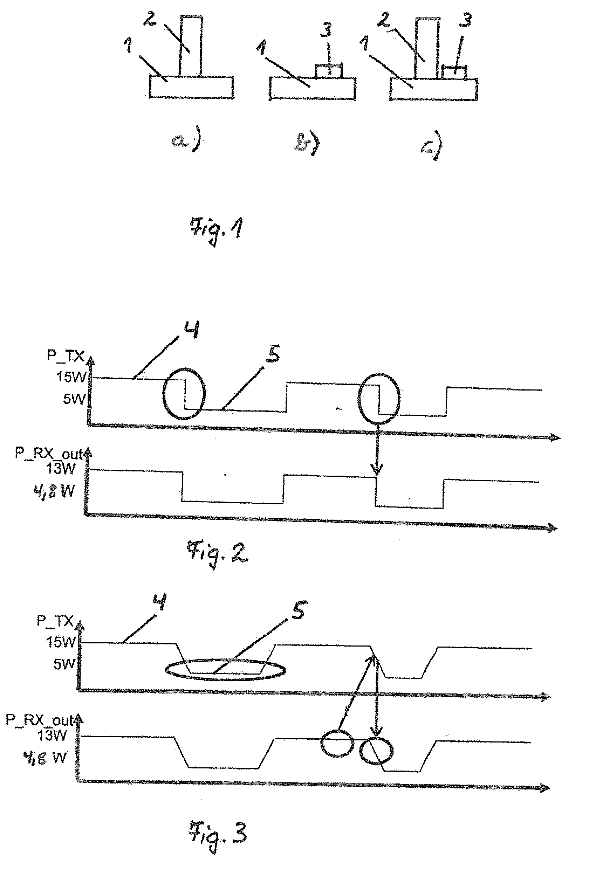

Die Figuren 1a) bis c) stellen die unterschiedlichen Situationen dar, in welchen sich der Sender 1 befinden kann.

Gemäß a) steht ein Empfänger 2, beispielsweise ein schnurloses Telefon, mit dem Sender 1 in Verbindung. Vor der Leistungsübertragung identifiziert sich der Empfänger 2 gegenüber dem Sender 1. In dieser Phase befindet sich der Sender 1 vorteilhaft in der Messphase 5, so dass er eine nur geringe Leistung aussendet. Zum Zwecke der Messung erhält der Sender 1 ein Antwortsignal von dem Empfänger 2, welches eine Information über die Leistung erhält, welche der Empfänger 2 von dem Sender 1 empfangen hat. Der Sender 1 errechnet nun aus der von ihm ausgesendeten Leistung und der von dem Empfänger 2 rückübertragenen Leistung eine Verlustleistung als Differenz. Sofern der Betrag dieser Verlustleistung unter einem maximalen Grenzwert liegt, erkennt der Sender 1 den Empfänger 2 als "gültiges Objekt" und schaltet von der Messphase 5 (beispielsweise 5 W) in die Leistungsphase 4 (beispielsweise 15 W). Der Empfänger 2 wird anschließend mit einer Leistung von 15 W geladen.

Gemäß b) befindet sich auf dem Sender 1 ausschließlich ein Fremdobjekt 3. Dieses Fremdobjekt 3 kann beispielsweise eine Münze sein. Der Sender 1 erkennt anhand der Änderungen des elektromagnetischen Feldes, dass sich auf dem Sender 1 ein feldabsorbierendes Objekt 3 befindet. Daraufhin erhöht der Sender 1 kurzzeitig die Sendeleistung, mit deren Hilfe sich typischerweise der Empfänger 1 beim Sender 1 per Rückübertragung identifiziert. Da das Fremdobjekt 3 jedoch nicht über solche Rückübertragungsfähigkeiten verfügt, schaltet der Sender 1 die Sendeleistung aufgrund der fehlenden Rückübertragung wieder ab.

In c) ist eine Situation dargestellt, in welcher sowohl ein Empfänger 2 als auch ein Fremdobjekt 3 mit dem Sender 1 in Kontakt stehen. In dieser Situation empfängt der Sender 1 von dem Empfänger 2 eine Information darüber, welche Leistung der Empfänger 2 von dem Sender 1 empfängt. Aufgrund des zusätzlich auf dem Sender 1 liegenden Fremdobjektes 3 empfängt der Empfänger 2 eine geringere Leistung von dem Sender 1 als dies der Fall ohne Fremdobjekt 3 wäre. Der Sender 1 vergleicht daraufhin die von ihm ausgesendete Leistung mit der von dem Empfänger 2 empfangenen Leistung und errechnet die Differenz, d. h. die Verlustleistung. Sofern diese Verlustleistung einen vorbestimmten Grenzwert überschreitet, wird die Leistungsphase nicht initiiert, d. h. der Sender 1 bleibt in der Messphase 5 bis das Fremdobjekt 3 entfernt wurde. Da die Verlustleistung nur mit einer von der Messmethode abhängenden Genauigkeit bestimmt werden kann, entsteht ein "Dunkelbereich" in welchem die Anwesenheit des Fremdobjektes 3 nicht detektiert werden kann und dieses somit aufgeheizt wird. Der Grenzwert für die Verlustleistung ist somit durch die Messgenauigkeit des Messsystems vorgegeben.

Fig. 2 zeigt ein Ausführungsbeispiel, gemäß welchem die Umschaltung zwischen der Leistungsphase 4 und der Messphase 5 von dem Sender 1 initiiert wird. Das Beispiel ist dabei auf eine Ausführungsvariante gerichtet, in welcher das erfindungsgemäße Verfahren mit sich abwechselnden Leistungsphasen 4 und Messphasen 5 durchgeführt wird. Ausgehend von einer Leistungsphase 4, in welcher der Sender 1 15 W Leistung überträgt, schaltet der Sender 1 nach einer vorbestimmten Zeitspanne die ausgesendete Leistung von 15 W auf 5 W um. Das Aussenden einer Leistung von 5 W entspricht dabei der Messphase. Wie man anhand der Figur sieht ergibt sich dadurch ein stufenartiger Abfall von 15 W auf 5 W. Die angegebenen Leistungen sind dabei willkürlich gewählt und entsprechen der Leistung des Medium Power Standards und des Low Power Standards. Allerdings ist die Erfindung ebenfalls mit anderen Leistungswerten durchführbar. Im WPC MP Standard (Medium Power Standard) entspricht die Zeitspanne zwischen den einzelnen Übertragungen typischerweise 1,5 Sekunden, maximal jedoch 4 Sekunden. In der Messphase 5 misst der Empfänger 2 die von dem Sender 1 empfangene Leistung und informiert den Sender 1 entsprechend über die empfangene Leistung. Die empfangene Leistung beträgt in diesem Beispiel 4 W. Daraufhin berechnet der Sender 1 die Differenz zwischen der von ihm ausgesendeten Leistung (5 W) und der von dem Empfänger 2 empfangenen Leistungen (4 W). Sofern die Differenz (0,2 W), d. h. die Verlustleistung, unter einem vorgegebenen Grenzwert liegt, wird darauf geschlossen, dass sich kein Fremdobjekt 3 auf dem Sender 1 befindet (dies wird hier angenommen). Sodann schaltet der Sender 1 die von ihm ausgesendete Leistung wieder von 5 W auf 15 W. Damit beginnt eine weitere Leistungsphase 4. Der Wechsel zwischen Leistungsphase 4 und Messphase 5 kann in einem vorbestimmten Zeitabstand erfolgen, jedoch wäre es alternativ auch möglich, dass dieser Wechsel zeitlich unregelmäßig erfolgt, zum Beispiel aufgrund einer vom Empfänger 2 ausgesendeten Anweisung, welche zu einem dem Empfänger 2 passenden Augenblick ausgesendet wird.

Fig. 3 zeigt ein Verfahren, bei welchem die Leistungsänderung von dem Empfänger 2 initiiert wird. Dabei fordert der Empfänger 2 zu einem von ihm frei bestimmbaren Zeitpunkt den Sender 1 auf, die übertragene Leistung zu reduzieren, so dass eine Messphase 5 mit geringerer Leistung ausgeführt werden kann. Wie in der Figur dargestellt kann der Empfänger 2 den Sender 1 schrittweise auffordern, die ausgesendete Leistung kontinuierlich zu reduzieren, bis die Leistung von 15 W auf 5 W reduziert wurde. Den besten Zeitpunkt für die Umschaltung der ausgesendeten Leistung kann der Empfänger 2 dabei nach seiner aktuellen Ladungs- und Laststromsituation bestimmen. Sofern der Empfänger 2 wie in dem gegebenen Beispiel nur 13 W von 15 W empfängt, kann dieser eine umgehende Messphase 5 veranlassen, in welcher überprüft wird, ob sich ein Fremdobjekt 3 zwischen Sender 1 und Empfänger 2 befindet. Während der Messphase 5 misst der Empfänger 2 die von dem Sender 1 empfangene Leistung und informiert den Sender 1 über sein Messergebnis. Nachdem der Sender 1 diese Information von dem Empfänger 2 erhalten hat, errechnet dieser die Verlustleistung und verhindert das Umschaltung in die Leistungsphase 4 solange bis das Fremdobjekt 3 entfernt wurde, falls ein Fremdobjekt vermutet wird. Sofern die Verlustleistung jedoch unter dem jeweiligen vorgegebenen Grenzwert liegt, schaltet der Sender 1 auf Anfrage des Empfänger 2 die Leistung wieder von der Messleistung, beispielsweise 5 W, auf die Leistung für die Leistungsphase 4, beispielsweise 15 W, um.

### Bezugszeichenliste

- 1: Sender
- 2: Empfänger
- 3: Fremdobjekt
- 4: Leistungsphase
- 5: Messphase

## Patentansprüche

1. Verfahren zur kabellosen Übertragung einer Leistung zwischen einem Sender (1) und einem Empfänger (2) aufweisend eine Leistungsphase (4) und eine Messphase (5), wobei der Empfänger (2) während der Messphase (5) eine empfangene Leistung misst und eine Information über die gemessene Leistung an den Sender (1) übermittelt, wobei der Sender (1) die von ihm ausgesendete Leistung mit der von dem Empfänger (2) gemessenen Leistung vergleicht und daraus eine Verlustleistung ermittelt, wobei die Leistungsphase (4) unterbleibt, wenn die Verlustleistung einen maximal zulässigen Grenzwert überschreitet, **dadurch gekennzeichnet,**
**dass** der Sender (1) während der Messphase (5) eine Leistung aussendet, welche geringer ist als die während der Leistungsphase (4) ausgesendete Leistung, wobei der Sender (1) während der Leistungsphase (4) eine Leistung von mehr als 5 W, insbesondere von 15 W, aussendet, wobei der Sender (1) während der Messphase (5) eine Leistung von höchstens 5 W aussendet.

2. Verfahren nach Anspruch 1, **dadurch gekennzeichnet, dass** sich Messphasen (5) und Leistungsphasen (4) zeitlich aufeinanderfolgend abwechseln.

3. Verfahren nach Anspruch 1 oder 2, **dadurch gekennzeichnet, dass** Messphasen (5) in zeitlich regelmäßigen Abständen durchgeführt werden.

4. Verfahren nach Anspruch 1, **dadurch gekennzeichnet, dass** vor einer Leistungsphase (4) einmalig eine Messphase (5) ausgeführt wird.

5. Verfahren nach einem der vorhergehenden Ansprüche, **dadurch gekennzeichnet, dass** der Sender (1) eine Messphase (5) initiiert.

6. Verfahren nach einem der vorhergehenden Ansprüche, **dadurch gekennzeichnet, dass** der Empfänger (2) eine Messphase (5) initiiert.

## Claims

1. A method for the cableless transmission of power between a sender (1) and a receiver (2) comprising a power phase (4) and a measurement phase (5), wherein the receiver (2) measures a received power during the measurement phase (5) and transmits information about the measured power to the sender (1), wherein the sender (1) compares the power sent out by it with the power measured by the receiver (2) and determines a power loss on the base of this, wherein the power phase (4) stops, if the power loss exceeds a maximum permitted limit,
**characterized in**
**that** the sender (1) sends out a power during the measurement phase (5), which power is smaller than the power sent out during the power phase (4), wherein the sender (1) sends out a power of more then 5 W, in particular 15 W, during the power phase (4), wherein the sender (1) sends out a power of not more than 5 W during the measurement phase (5).

2. A method according to claim 1, **characterized in that** measurement phases (5) and power phases (4) alternate sequentially in time.

3. A method according to claim 1 or 2, **characterized in that** measurement phases (5) are carried out in regular time intervals.

4. A method according to claim 1, **characterized in that** a measurement phase (5) is once carried out before a power phase (4).

5. A method according to one of the preceding claims, **characterized in that** the sender (1) initiates a measurement phase (5).

6. A method according to one of the preceding claims, **characterized in that** the receiver (2) initiates a measurement phase (5).

## Revendications

1. Procédé de transmission sans fil d'une puissance entre un émetteur (1) et un récepteur (2) comprenant une phase de puissance (4) et une phase de mesure (5), le récepteur (2) mesurant une puissance reçue au cours de la phase de mesure (5) et transmettant une information par rapport à la puissance mesurée à l'émetteur (1), l'émetteur (1) comparant la puissance émise par lui avec la puissance mesurée par le récepteur (2) et déterminant une perte de puissance à la base du résultat, la phase de puissance (4) étant omise, si la perte de puissance dépasse une valeur limite maximale admissible,
**caractérisé en ce**
**que** l'émetteur (1) émet une puissance pendant la phase de mesure (5), laquelle puissance est plus faible que la puissance émise pendant la phase de puissance (4), l'émetteur (1) émettant une puissance de plus de 5 W, notamment de 15 W pendant la phase de puissance (4), l'émetteur (1) émettant une puissance d'au plus 5 W pendant la phase de mesure (5).

2. Procédé selon la revendication 1, **caractérisé en ce que** des phases de mesure (5) et des phases de puissance (4) alternent en séquence temporelle.

3. Procédé selon la revendication 1 ou la revendication 2, **caractérisé en ce que** des phases de mesure (5) sont réalisées dans des intervalles temporels réguliers.

4. Procédé selon la revendication 1, **caractérisé en ce qu'**une phase de mesure (5) est réalisée une seule fois avant une phase de puissance (4).

5. Procédé selon l'une des revendications précédentes, **caractérisé en ce que** l'émetteur (1) initie une phase de mesure (5).

6. Procédé selon l'une des revendications précédentes, **caractérisé en ce que** le récepteur (2) initie une phase de mesure (5).
